# EUROPEAN PATENT APPLICATION

(11) **EP 2 813 884 A1**
(43) Date of publication of application: **17.12.2014**
(21) Application number: 14155635.7
(22) Date of filing: 18.02.2014
(51) Int. Cl.: G02F 1/13357, A47F 3/04, A47F 11/06, E06B 9/24, F25D 23/02, F25D 27/00

(54) **Transparent liquid crystal display arrangement for attachment to a transparent base structure**

(30) Priority: 21.02.2013 ZA 201301368
(71) Applicant: Onyx Display Media (Pty) Ltd., 2076 Melrose Arch, Gauteng (ZA)
(72) Inventor: Venturas, Panayiotis, Gauteng (ZA); Coudounaris, Andrew Gregory, Gauteng (ZA)
(74) Representative: Rooney, John-Paul

(57) **Abstract**

A flat panel electronic display arrangement for attachment to a transparent base structure (e.g. a fridge door), the electronic display arrangement including:
• a transparent LCD layer (212) operable to display electronic images based on a video input;
• a light source layer (220) arranged parallel to and operatively behind a majority of the transparent LCD layer (212), the light source layer (220) being operable to emit light directly behind the majority of the transparent LCD layer (212) and being at least partially light-transmissive;
• a frame or housing (102) to which the transparent LCD layer (212) and light source layer (220) are attached;
• a controller operable to control the video input to the transparent LCD layer (212) and the operation of the light source layer (220);
• a mounting arrangement (202) operable to mount the frame (102) to the transparent base structure; and, preferably,
• a switchable film layer (214) having controllable opacity, arranged parallel to and operatively behind the transparent LCD layer (212).

## Description

### FIELD OF INVENTION

This invention relates broadly to electronic display screens and more specifically to a flat panel electronic display arrangement for attachment to a transparent base structure such as a glass door or window.

### BACKGROUND OF INVENTION

The Applicant is aware of current efforts to attach or integrate electronic displays (e.g. LCD panels) into glass doors and especially into refrigerator (simply "fridge") doors. The Applicant has observed that an LCD flat panel can be fixed to one side (either outside or inside) of a glass fridge door, especially those of the type often found in shops and supermarkets. When the fridge is empty and the internal fridge light is on, the images/display from the flat panel seem fairly good. However, the quality is significantly diminished when the fridge is stocked with goods. Physical objects in the background seem to hinder the display to such an extent that the images cannot be seen clearly or at all.

The closest prior art of which the Applicant is aware is WO 2012/057457 and US 2012/0256854 which disclose various embodiments for flat panel display which may be mountable to fridge doors. However, these inventions do not address the abovementioned drawbacks and still do not provide high quality display characteristics when a fridge is in use under everyday usage conditions, e.g. cold and stocked and they do not display the ability to work without the cavity of a fridge, which they are using to bounce the light from the fridge, in order to light up the images on the transparent LCD.

The Applicant thus desires a flat panel electronic display arrangement which can be fitted to, for example, a fridge door, and which can provide high fidelity and clear images even under typical usage conditions or with other background obstructions.

### SUMMARY OF INVENTION

Accordingly, the invention provides a flat panel electronic display arrangement for attachment to a transparent base structure, the electronic display arrangement including:
an transparent LCD layer operable to display electronic images based on a video input;
a light source layer arranged parallel to and operatively behind a majority of the transparent LCD layer, the light source layer being operable to emit light directly behind the majority of the transparent LCD layer and being at least partially light-transmissive;
a frame or housing to which the transparent LCD layer and light source layer are attached;
a controller operable to control the video input to the transparent LCD layer and the operation of the light source layer; and
a mounting arrangement operable to mount the frame to the transparent base structure.

The flat panel electronic display arrangement may be at least partially light-transmissive thereby to permit through-viewing of objects behind the transparent base structure.

The display arrangement may include a layer of switchable film arranged parallel to and operatively behind the transparent LCD layer. The switchable film may be arranged in front of, or behind, the light source layer. There may be plural switchable film layers. Switchable film (or smart film: http://en.wikipedia.org/wiki/Smart film, accessed 13 February 2014) is well known in the electronic arts and the specific constructional technicalities are not germane to the invention.

There may be plural light source layers and/or transparent LCD layers. Other than it being required that at least one light source layer be behind at least one transparent LCD layer, the order, quantity, or arrangement of the plural layers may be variable (e.g. more layers added, re-arranged, etc.) and may be arranged to realise different display characteristics.

The light source layer may include a transparent sheet having light diffusing/reflecting structures therein, and one or more light sources arranged around edges of the sheet. The sheet may be acrylic. The structures may be colourless light diffusing particles embedded in the sheet which cause light to diffuse forward. The light sources may be LEDs or laser diodes. The light source layer may be a commercially unit such as that available from Evonik™ marketed under the name ACRYLITE^{®} LED (EndLighten) with details available at http://www.plexiglas.net/product/plexiglas/en/products/solid-sheets/endlighten/pages/default.aspx (accessed 13 February 2014).

The transparent base structure may be any transparent, preferably planar, object or structure. It may, for example, be a glass door or window. The Applicant believes that the invention is especially well-suited to a retail environment and the base structure could therefore be a shop door or window or a glass fridge door. The invention will be further described with reference to a transparent base structure in the form of a glass fridge door, but it will be appreciated that the application of the invention is not limited to fridges. It may also be installed on even colder appliances, such as freezers, or on warmer display cabinets.

The transparent LCD layer may be a transmissive display.

The controller may be operable to control the layers in accordance with opacity criteria. An opacity criterion may include proximity of an object in front of the electronic display arrangement. To this end, the electronic display arrangement may include a camera (e.g. a forward facing camera and/or a rear facing camera) or other proximity sensor. The camera may be connected to the controller. The controller may accordingly be operable to vary the opacity and/or intensity of the layers as a function of proximity of an object in front of the camera. The object may be a person or group of people. The camera may be a 2D camera, a 3D camera, a kinetic camera and/or a biometric camera.

In an embodiment in which the electronic display arrangement is intended exclusively for fridges, the frame may include bevelled or tapered edges. Thus, the electronic display arrangement can be attached to an inside of a glass door of the fridge with the frame not interfering, or interfering only minimally, with the seal of the fridge door.

The electronic display arrangement may include a power supply input. The power supply input may be on one or both sides of the electronic display arrangement. If the power supply input is on both sides, and only one of the power supply inputs needs a power supply to power the electronic display arrangement, then when the electronic display arrangement is mounted to a fridge door, at least one of the power supply inputs will be adjacent the hinge of the fridge, where power supply cables are more readily available.

The electronic display arrangement may have electronic components (including for example the controller) integrated or housed within the frame. Instead, or in addition, the electronic display arrangement may include a communication arrangement (e.g. a wired communication port or a wireless communication transceiver) in the frame for connection to separate electronics including the controller. In other words, the electronic display arrangement may be a monolithic or unitary device, or may comprise a plurality of components (e.g. frame and controller) networked or connected together.

The mounting arrangement may be in the form of, or include, one of a plurality of potentially suitable technologies. The mounting arrangement may be operable to mount the electronic display arrangement releasably or non-releasably to the base structure.

In one embodiment, the mounting arrangement may be in the form of an adhesive on a peripherally extending face of the frame. The adhesive may be protected by a backing strip (or release strip) prior to application.

In another embodiment, the mounting arrangement may include one or more suction elements (e.g. suction cups). In such case, the mounting arrangement may include a pump or suction mechanism, e.g. in the form of a lever attached to a cam, to actuate or operate the suction elements.

In another embodiment, the mounting arrangement may be in the form of at least one magnetic element, e.g. a permanent magnetic or electromagnet. The mounting formation may then be operable to engage with a ferromagnetic structure, e.g. a metal frame of a fridge door.

In another embodiment, the mounting arrangement may be in the form of conventional mechanical fasteners, e.g. nuts and bolts, rivets, or screws, etc. The electronic display arrangement may include an acoustic transducer, e.g. a speaker, or a sound pod which is operable to engage with the base structure (e.g. glass) thereby to act as a speaker.

The electronic display arrangement may include a media player or other computing device operable to deliver at least video and optionally audio to the display panel via the controller. The controller may include any control and drive circuitry necessary for the operation of the transparent LCD layer. The electronic display arrangement may include a storage medium, e.g. flash memory, for local storage of, for example, computer programs, digital media, etc.

The electronic display arrangement may include a photovoltaic cell (e.g. a solar panel) to capture ambient light (e.g. light from a shop or store in which the fridge is operated) and convert it to electricity. The electronic display arrangement may include a solar management system and a battery operable to be charged from the photovoltaic cell and to power the transparent LCD layer. The photovoltaic cell may be instead of or in addition to a conventional electrical input from mains electricity.

The electronic display arrangement may include a touch sensitive layer. The touch sensitive layer may be capacitive or resistive. The touch sensitive layer may be integrated into the transparent LCD layer or may be separate therefrom, e.g. parallel thereto. The electronic display arrangement may include a gesture control input arrangement. The opacity criterion or criteria may be controllable via a gesture-based input.

The electronic display arrangement may include at least one protective layer. The protective layer may be of glass (e.g. hardened glass), polycarbonate (e.g. Gorilla™ glass) or of a polymer (e.g. acrylic/Plexiglas™). The protective layer may be on an inner side and/or an outer side of the transparent LCD layer. The transparent LCD layer may therefore be protected, in use, by being sandwiched between the protective layer on the inside and the transparent base structure on the outside.

The electronic display arrangement may include a wireless communication module. The wireless communication module may permit remote control of the electronic display arrangement. For example, video content may be controlled and uploaded to the electronic display arrangement wirelessly (whether streamed for live playback or for local storage and later playback). Thus, an external computing device, such as a PC, laptop, tablet (e.g. iPad) or the like may be used to control or stream media. Further, an external computing device may be operable to control the opacity criterion or criteria of the switchable film.

The electronic display arrangement may include an RFID transponder and/or an RFID interrogator.

The invention extends to a method of operating an electronic display arrangement, the method including:
displaying electronic images on an transparent LCD layer based on a video input;
sensing proximity by means of a camera or proximity sensor of an object in front of the electronic display arrangement; and
adjusting, by a controller, one of:
   opacity of a layer of switchable film parallel to and operatively behind the transparent LCD layer; or
   intensity of a light source layer parallel to and operatively behind the transparent LCD layer,
based on the sensed proximity of the object.

The method may include the prior step of mounting the electronic display arrangement to a transparent base structure by means of a mounting arrangement.

The method may include providing a light source, in the electronic display arrangement, directed towards the transparent LCD layer.

The invention extends to a non-transitory computer readable medium which includes stored thereon a computer program which, when executed by a computer, directs the operation of the computer to perform the method as defined above.

### BRIEF DESCRIPTION OF DRAWINGS

The invention will now be further described, by way of example, with reference to the accompanying diagrammatic drawings.

In the drawings:
- **FIGURE 1**: shows a three-dimensional view from the back of an electronic display arrangement in accordance with the invention;
- **FIGURE 2**: shows a three-dimensional view from the front of the display arrangement of FIGURE 1;
- **FIGURE 3**: shows a cross-sectional view of a first embodiment of the display arrangement of FIGURE 1;
- **FIGURE 4**: shows a cross-sectional view of a second embodiment of the display arrangement of FIGURE 1;
- **FIGURE 5**: shows a cross-sectional view of a third embodiment of the display arrangement of FIGURE 1;
- **FIGURE 6**: shows a schematic view of the display arrangement of FIGURE 1;
- **FIGURE 7**: shows a three-dimensional exploded view of the display arrangement of FIGURE 1 and a transparent base structure;
- **FIGURE 8**: shows a three-dimensional assembled view of the display arrangement and transparent base structure of FIGURE 7;
- **FIGURE 9A**: shows a schematic view of the display arrangement of FIGURE 1 in use, with high opacity;
- **FIGURE 9B**: shows a schematic view of the display arrangement of FIGURE 1 in use, with medium opacity;
- **FIGURE 9C**: shows a schematic view of the display arrangement of FIGURE 1 in use, with low opacity; and
- **FIGURE 10**: shows a flow diagram of a method, in accordance with the invention, of operating an electronic display arrangement.

### DETAILED DESCRIPTION OF EXAMPLE EMBODIMENT

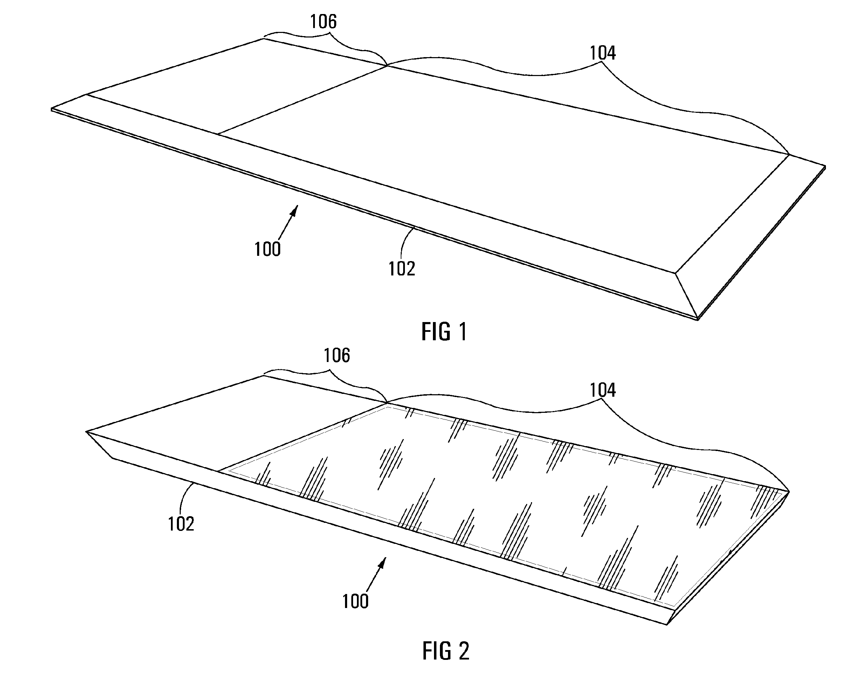

In the FIGURES, reference numeral 100 generally indicates an electronic display arrangement in accordance with the invention. As illustrated in FIGURES 1-2, the electronic display arrangement 100 is generally rectangular but its dimensions can be varied as desired, depending on the base structure to which the display arrangement 100 is intended to be applied. For example, the electronic display arrangement 100 may be 0.7 m wide and 1.6 m high. The electronic display arrangement 100 is relatively thin, around 3 cm thin or less. (Conversion ratio: 1 inch = 2.54 cm.)

This electronic display arrangement 100 is intended for application to a transparent base structure in the form of a glass fridge door. This example is further described with reference to a fridge and fridge door but, as mentioned above, the application is not limited to fridges. In this example, the display arrangement 100 includes a display portion 104 and a separate control portion 106 (described further below).

The electronic display arrangement 100 includes a frame 102 which is sufficiently rigid and sturdy to support the weight of the electronic display arrangement 100 and to protect the integrity of the sensitive electronic components therein. The frame 102 is bevelled or tapered. This bevel minimises interference with seals of the fridge.

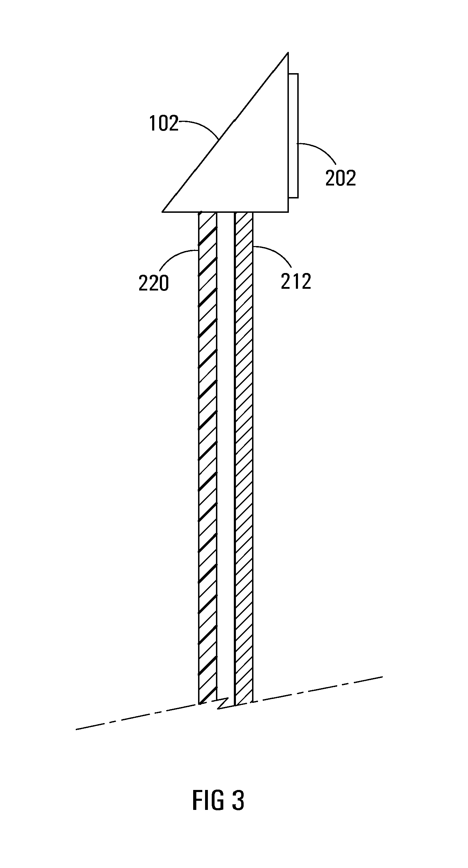

FIGURES 3-5 more clearly show the display portion 104. The frame 102 includes a mounting arrangement 202 operable to mount the display arrangement 100 to the fridge door. While there are a plurality of mounting technologies which may find application here, the mounting arrangement 202 in this example is in the form of an adhesive 202 applied to an outer surface of the frame 102 around the periphery of the frame 102. Using the adhesive, the display arrangement 100 can be securely mounted to a new or existing fridge door.

FIGURES 3-5 also illustrates strata of the display portion 104. FIGURE 3 illustrates a first embodiment in which the display arrangement 100 includes an transparent LCD layer 212 operable to display electronic images based on a video input and a switchable light source layer 220 arranged parallel to and operatively behind a majority of the transparent LCD layer 212. The light source layer 220 may be switchable to vary an intensity of light emitted therefrom. It is also at least partially light-transmissive.

The transparent LCD layer 212 employs LCD-based display technology. There are many LCD variants which may be practicable, such as IPS, PLS, TFT, etc. and the specific technology used is not germane to this disclosure, provided that the transparent LCD layer 212 is transparent or at least translucent. The transparent LCD layer 212 is operable to display electronic images/video based on an electronic video input (e.g. HDMI, DVI, VGA, etc.).

The light source layer 220 is operable to emit light evenly over most or all of its surface which is directed towards the transparent LCD layer 212, thereby to act as a backlight for transparent LCD layer 212. In this example, the light source layer is a sheet of commercially available ACRYLITE® LED (EndLighten).

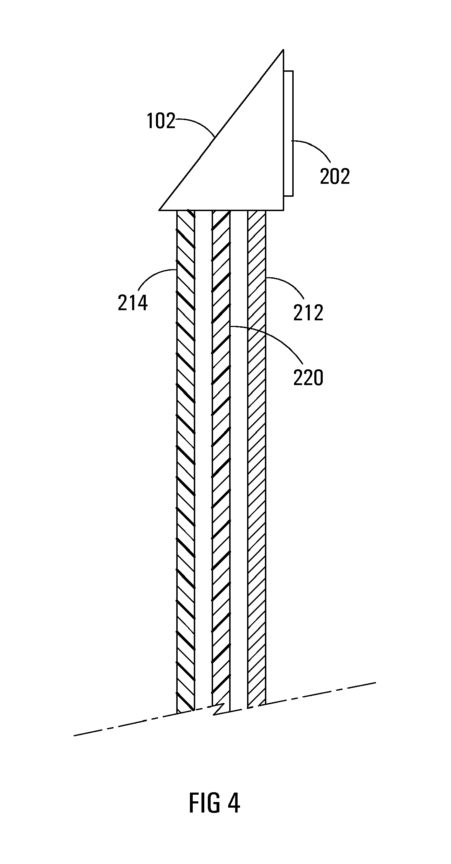

FIGURE 4 illustrates a second embodiment including the transparent LCD and light source layers 212, 220 of FIGURE 3 and also including a switchable film layer 214 arranged behind the light source layer 220. Instead of being a discrete layer 214 as illustrated, the switchable film layer 214 may be applied (e.g. adhesively) to another layer, e.g. the back of the light source layer 220.

Opacity of the switchable film 214 is electronically controlled, depending on defined opacity criteria, to be variable from transparent to opaque. The switchable film 214 can thus present an opaque backing for the transparent LCD layer 212 or a mere clear window interfering minimally or not at all with light transmission.

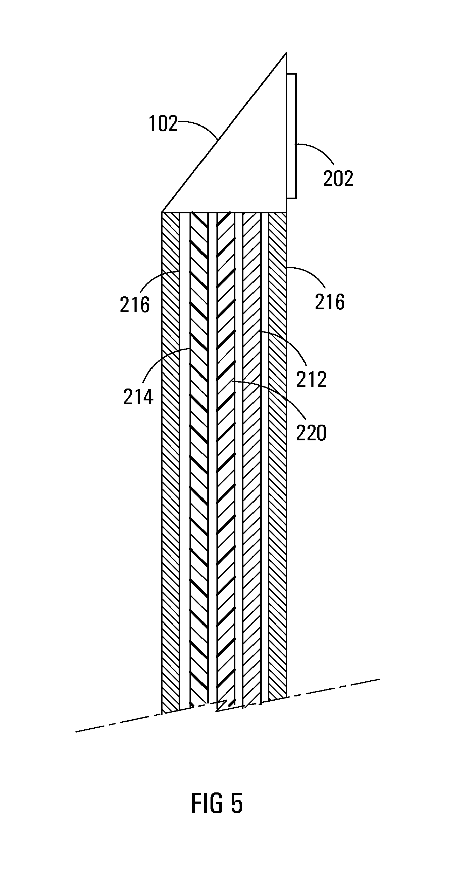

FIGURE 5 illustrates a third embodiment including the layers 212, 220, 214 of FIGURE 4 and also including protective layers 216 arranged on outer sides of the remaining layers 212, 220, 214. The protective layers 216 are clear and may be of glass (e.g. hardened glass), polycarbonate (e.g. Gorilla™ glass) or of a polymer (e.g. acrylic/Plexiglas™). Instead of two protective layers 216 as illustrated, there may be only one, on an inner or outer side. The protective layers 216 serve as a physical barrier to protect the more delicate transparent LCD layer 212 and may also serve as a thermal barrier to help provide a measure of insulation from the cold within the fridge, and from any warmth generated by the layers 212, 202, 214.

It may be possible or even desirable to include a touch sensitive layer (not illustrated) operable to receive a capacitive touch input from a person (in similar fashion to the touch screen of a smart phone or tablet). If included, the touch sensitive layer and the transparent LCD layer 212 may be a single, integrated layer.

The layers 216, 212, 202, 214, 216 may be spaced slightly apart (as illustrated) or in contact with each other. The display arrangement 100 may include spacing members (not illustrated) to locate the layers 216, 212, 202, 214, 216 in place and space them a desired distance apart.

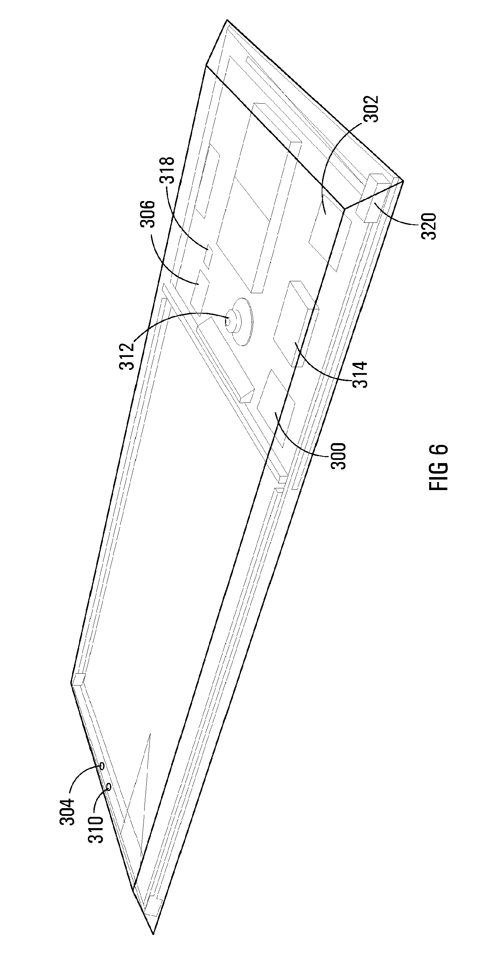

FIGURE 6 illustrates the control portion 106 of the electronic display arrangement 100 in more detail. The electronic display arrangement 100 has a controller 300 which includes a processor, a physical non-transitory computer-readable medium and a computer program stored on the computer-readable medium. The computer program is operable to direct the operation of the processor. The controller 300 includes conventional circuitry operable to control the operation of the transparent LCD layer 212 to display images and videos. To this end, the electronic display arrangement 100 has a media player 302 connected to the controller 300 for storing media, such as promotional videos and other video files.

The display arrangement 100 optionally has both a web cam 304 and a motion/proximity sensor 306. Both the web cam 304 and sensor 306 are coupled to the controller 300 to provide an indication of the proximity of an object in front of the display arrangement 100. The object is usually a person approaching the fridge or merely walking past. The controller 300 is therefore able to control connected components based on sensed objects, such as the movement of people.

Specifically, the controller 300 can vary the opacity of the switchable film 214 (if present) and light intensity of the light source layer 220 based on the proximity of a person as sensed by the web cam 304 and/or motion/proximity sensor 306. The controller 300 may vary the light source layer 220 and switchable film 214 simultaneously for a synergistic effect. For example, to increase the visibility of the transparent LCD layer 212, the controller 300 can increase the intensity of the light source layer 220 while increasing the opacity of the switchable film 214 to obscure contents of the fridge. Conversely, to render innards of the fridge more visible, the controller 300 may decrease the intensity of the light source layer 220 while decreasing the opacity (i.e. increasing the transparency) of the switchable film 214. Instead, the light source layer 220 could be constant (e.g. not being capable of intensity variation) with only the switchable film 214 being variable.

Optionally, the display arrangement 100 has a microphone 310 adjacent the web cam 304 to facilitate further interaction with a person in front of the electronic display arrangement 100. Also, there is provided an acoustic transducer in the form of a sound pod 312. When the electronic display arrangement 100 is installed against the fridge door, the sound pod 312 is urged against the door which then acts as a medium to produce and transmit sound. The sound pod 312 is driven by a sound amplifier 314. The electronic display arrangement 100 also includes a power supply input 320 to receive external power (e.g. 12 V DC). The display arrangement 100 may also have a wireless communications module (e.g. Wi-Fi and/or Bluetooth) 318 for remote management of the display arrangement 100 or uploading of content.

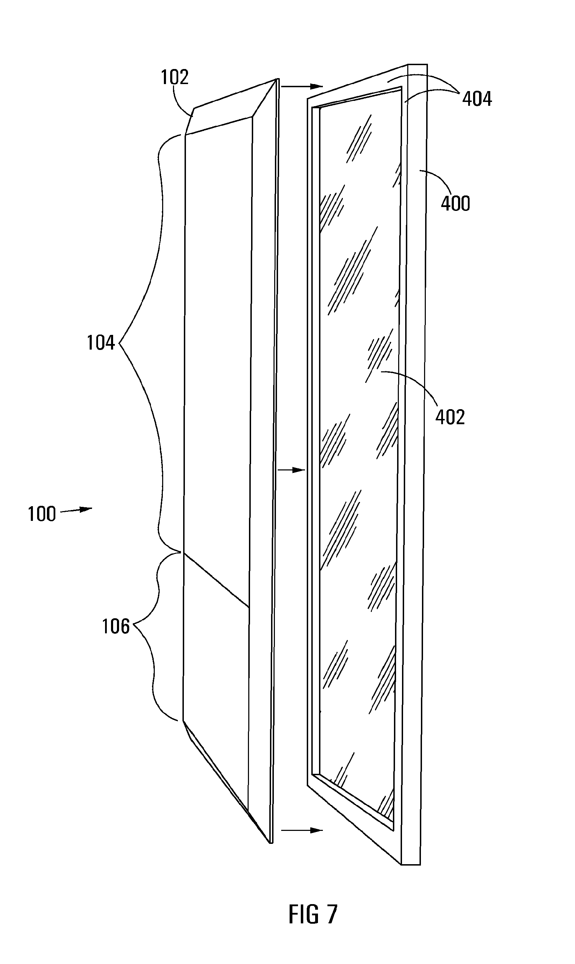

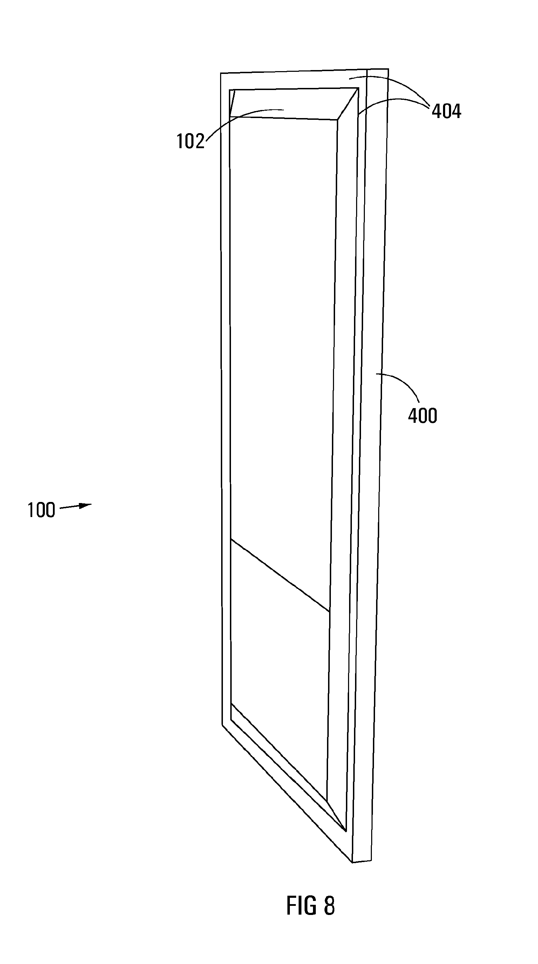

FIGURES 7-8 illustrate mounting of the display arrangement 100. The specific mounting process may vary depending on the chosen mounting arrangement. In this example, the mounting arrangement is an adhesive 202. Accordingly, an inner surface 402 of the fridge door 400 is cleaned thoroughly. A release strip is pulled away from the adhesive 202 to expose the adhesive 202. The display arrangement 100 is pressed against the fridge door 400 so that the adhesive 202 adheres to the inner surface 402 thereby mounting the display arrangement 100 to the fridge door 400. Care is taken to ensure that the bevelled frame 102 fits flush against the surface 402 and does not interfere with the seal 404. As can be seen in FIGURE 8, the bevelled surface of the frame 102 permits the frame 102 to fit beneath the existing fridge seal 404.

The electronic display arrangement 100 is thus mounted securely and unobtrusively inside the fridge door 400, such that the transparent LCD layer 212 is clearly visible from the outside. Further, the door 400 need not be of any special construction or configuration but may merely be a conventional glass fridge door. Provided that the electronic display arrangement 100 is sized correctly, it should be able to be fitted to most existing fridge doors. The fridge 401 can then be stocked with products, e.g. soda cans.

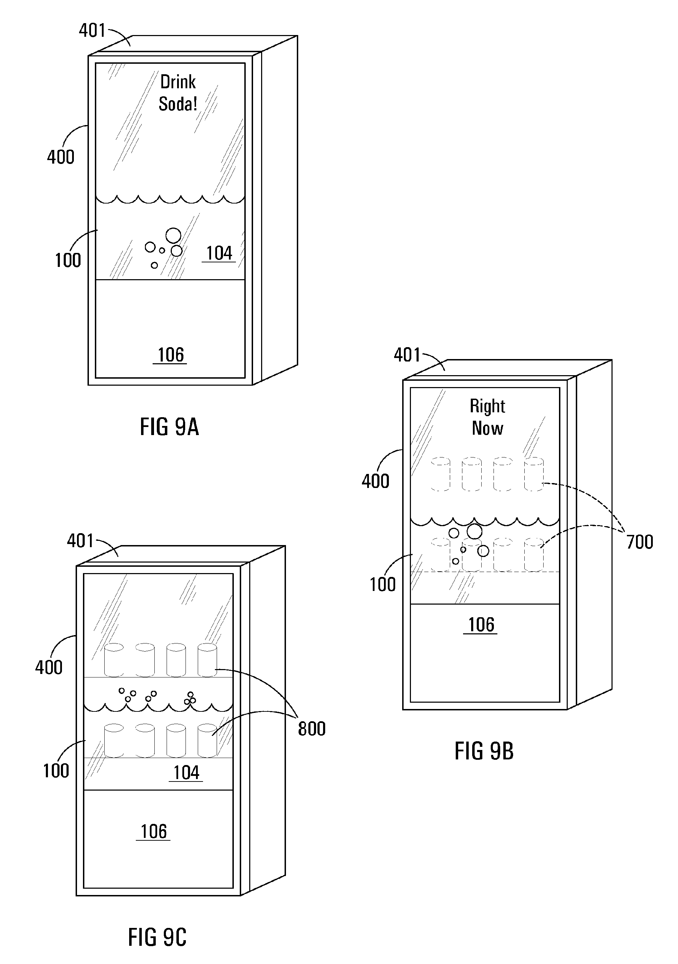

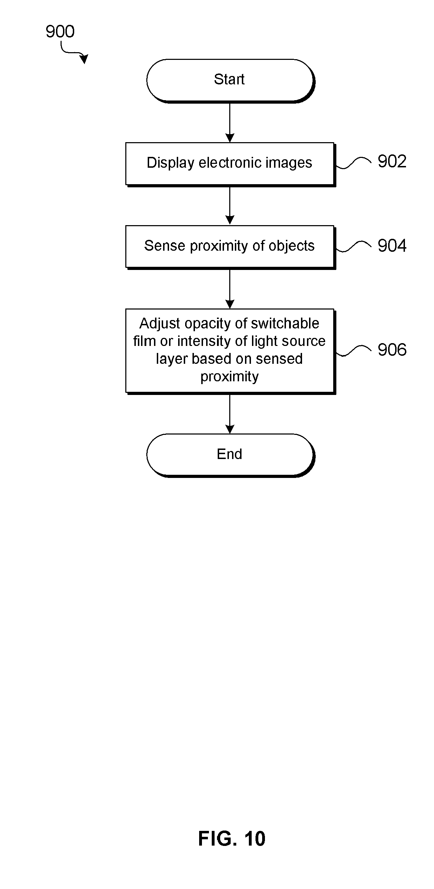

Referring now to FIGURES 9A-9C, the invention will be further described in use. FIGURES 9A-9C show a series of images in which the electronic display arrangement 100 has different opacity conditions while FIGURE 10 shows a flow diagram of a method 900, in accordance with the invention, of operating the electronic display arrangement 100 interactively, based on proximity of a person.

It will be understood that the method 900 is a mere example of how the display arrangement 100 may be operated, with many other methodologies and opacity criteria being envisaged. Further, there need not even be any opacity criteria: the display arrangement 100 may have fixed opacity characteristics, or random, pre-defined, or programmable opacity cycles.

The media player 302, under the direction of the controller 300, feeds continuous video to the transparent LCD layer 212. The video feed may be in the form of a series of product advertisements (e.g., targeted advertising) set to repeat continuously. Accordingly, the transparent LCD layer 212 displays (at block 902) the electronic video images.

The transparent LCD layer 212 itself is generally transparent, even when displaying electronic images. Any objects, such as the soda cans, behind the transparent LCD layer 212 would normally be visible through the transparent LCD layer 212. From a distance, the appearance of the soda cans could interfere with the image displayed on the transparent LCD layer 212. This could create a blurred or indistinct display.

Thus, the exemplary opacity criterion in this example prescribes that when the nearest object (person) is 10 m away or further, the switchable film 214 should be fully opaque, and the light source layer 220 should be at maximum intensity, to provide a clean and clear background for the transparent LCD layer 212 so that images displayed thereon can be clearly seen from a distance. As the person moves closer, the opacity of the switchable film 212 should be gradually reduced until the person is about 1.5 m away, at which point the opacity should be as low as possible, i.e. transparent. When the person is 1.5 m away or nearer, both the images displayed on the transparent LCD layer 212 and the contents of the fridge 401 will be clearly and simultaneously visible. Optionally, the intensity of the light source layer 220 can also be varied, e.g. decreased.

Thus, the motion/proximity sensor 306 senses (at block 904) that there are no nearby objects in front of the electronic display arrangement 100 and communicates these sensor readings to the controller 300. The controller 300, in turn, adjusts (at block 906) the opacity of the switchable film 214 to maximum, i.e. fully opaque. The soda cans inside the fridge 401 are not visible through the film 214 and do not interfere with the display of the images. Also, display arrangement 100 is self-illuminated (on account of the light source layer 220) and is not dependent on light from the interior of the fridge 401. The light source layer 220 is also in front of the switchable film 214 so the transparent LCD layer 212 can display images at maximum brightness/contrast even when the fridge 401 is full and the switchable film 214 is opaque.

As the person approaches the fridge 401 and gets closer than about 10 m, the motion/proximity sensor 306 relays this information to the controller 300 which begins gradually to decrease the opacity of the switchable film 214. Thus, the soda cans 700 within the fridge 401 gradually become visible as the person moves closer (see FIGURE 9B). When the person is 1.5 m or nearer, the switchable film 214 is set to be fully transparent and the soda cans 800 are quite clearly visible (FIGURE 9C) through the display arrangement 100. Because the person is now sufficiently close, he/she can discern both the soda cans 800 and the images which continue to be displayed on the transparent LCD layer 212. If desired, the controller 300 could also vary the images displayed on the transparent LCD layer 212 as a function of proximity, e.g. display different images or no images as the person draws near.

Other incidental features may also be proximity activated, e.g. playing of audio as the person approaches. The web cam 304 could capture video of the person's face and display it on the transparent LCD layer 212. Media related to the product could be displayed, e.g. a river of flowing soda. The touch sensitive layer 210 may permit the person to interact with the electronic display arrangement 100, e.g. by receiving a user input, such as a price query, and displaying an associated output on the transparent LCD layer 212, such as the price of the soda.

If it is desired, for whatever reason, not to display an image but rather to permit maximum visibility of the contents of the fridge 401, the transparent LCD layer 212 can be turned off, or merely display a blank image, the light source layer 220 can be set to minimum intensity, and the switchable film 214 (if present) can be set to minimum opacity, the entire display arrangement 100 thus being substantially clear and even invisible.

The Applicant believes that the invention as exemplified is advantageous for a number of reasons. The self-contained light source layer 220 permits the transparent LCD layer 212 to display at full brightness without being reliant on a light source within the fridge 401 (e.g. a conventional fridge light). Thus, products within the fridge 401 do not impede the operation of the electronic display arrangement 100. This is a significant drawback of prior art display, in that they rely on external or ambient back-lighting, which is not always available. Thus, the display arrangement 100 of the present disclosure should have far superior operating characteristics such as brightness and contrast when in use *in situ.*

The optional switchable film 214 permits selection and discrimination of how much of the fridge's contents should be transmitted through the electronic display arrangement 100. This is particularly useful for providing clarity at both near and far distances and introduces a proximity-dependent interactive feature.

## Claims

1. A flat panel electronic display arrangement for attachment to a transparent base structure, the electronic display arrangement including:
a transparent LCD layer operable to display electronic images based on a video input;
a light source layer arranged parallel to and operatively behind a majority of the transparent LCD layer, the light source layer being operable to emit light directly behind the majority of the transparent LCD layer and being at least partially light-transmissive;
a frame or housing to which the transparent LCD layer and light source layer are attached;
a controller operable to control the video input to the transparent LCD layer and the operation of the light source layer; and
a mounting arrangement operable to mount the frame to the transparent base structure.

2. The display arrangement as claimed in claim 1, which includes a layer of switchable film arranged parallel to and operatively behind the transparent LCD layer.

3. The display arrangement as claimed in claim 1, in which the light source layer includes a transparent sheet having light diffusing/reflecting structures therein, and one or more light sources arranged around edges of the sheet.

4. The display arrangement as claimed in claim 3, in which the sheet is acrylic and in which the structures are colourless light diffusing particles embedded in the sheet which cause light to diffuse forward.

5. The display arrangement as claimed in claim 1, in which the transparent base structure is a glass door or window.

6. The display arrangement as claimed in claim 5, in which the transparent base structure is a fridge door.

7. The display arrangement as claimed in claim 1, in which the transparent LCD layer is a transmissive display.

8. The display arrangement as claimed in claim 1, in which the controller is operable to control the layers in accordance with opacity criteria.

9. The display arrangement as claimed in claim 8, in which an opacity criterion includes proximity of an object in front of the electronic display arrangement.

10. The display arrangement as claimed in claim 1, which includes a proximity sensor connected to the controller.

11. The display arrangement as claimed in claim 1, which includes at least one protective layer on an inner or outer side thereof.

12. The display arrangement as claimed in claim 1, in which the mounting arrangement is selected from:
an adhesive on a peripherally extending face of the frame;
at least one more suction element
at least one magnetic element; or
mechanical fasteners.

13. The display arrangement as claimed in claim 1, which includes an acoustic transducer in communication with the controller.

14. The display arrangement as claimed in claim 13, in which the acoustic transducer is operable to engage with the base structure thereby to act as a speaker.

15. The display arrangement as claimed in claim 1, which includes a media player or other computing device operable to deliver at least video to the display panel via the controller.

16. The display arrangement as claimed in claim 1, which includes a photovoltaic cell to capture ambient light and convert it to electricity.

17. The display arrangement as claimed in claim 1, which includes a touch sensitive layer.

18. The display arrangement as claimed in claim 17, which is operable to receive gesture control input via the touch sensitive layer.

19. The display arrangement as claimed in claim 1, which includes a wireless communication module operable to remote control thereof arrangement.

20. The display arrangement as claimed in claim 1, which includes an RFID transponder and/or an RFID interrogator.

21. A method of operating an electronic display arrangement, the method including:
displaying electronic images on a transparent LCD transparent LCD layer based on a video input;
sensing proximity by means of a camera or proximity sensor of an object in front of the electronic display arrangement; and
adjusting, by a controller, one of:
opacity of a layer of switchable film parallel to and operatively behind the transparent LCD layer; or
intensity of a light source layer parallel to and operatively behind the transparent LCD layer,
based on the sensed proximity of the object.

22. A non-transitory computer readable medium which includes stored thereon a computer program which, when executed by a computer, directs the operation of the computer to perform the method as claimed in claim 21.

23. A fridge or fridge door including the electronic display arrangement as claimed in claim 1.
